# EUROPÄISCHE PATENTANMELDUNG

(11) **EP 1 659 814 A1**
(43) Veröffentlichungstag der Anmeldung: **24.05.2006**
(21) Anmeldenummer: 05023569.6
(22) Anmeldetag: 27.10.2005
(51) Int. Cl.: H04Q 7/36

(54) **Verfahren zur Intersystem-Interferenzunterdrückung zwischen zumindest zwei Funkübertragungsverfahren**

(71) Anmelder: SIEMENS AKTIENGESELLSCHAFT, 80333 München (DE)
(72) Erfinder: Luo, Jijun, 80797 München (DE); Mohyeldin, Eiman Bushra, 81467 München (DE); Schulz, Egon, Dr., 80993 München (DE); Tjondronegoro, Pramadityo, 81377 München (DE)

(57) **Zusammenfassung**

Die Erfindung betrifft ein Verfahren zur Intersystem-Interferenzunterdrückung zwischen zumindest zwei Funkübertragungsverfahren, bei dem zur Funkversorgung eines betrachteten räumlichen Bereichs sowohl ein erstes Funkübertragungsverfahren eines ersten Netzwerks als auch ein zweites Funkübertragungsverfahren eines ersten Netzwerks zur Verfügung steht.

Das erste Funkübertragungsverfahren verwendet ein erstes Frequenzband und das zweite Funkübertragungsverfahren verwendet ein zweites Frequenzband zur Funkübertragung, wobei zwischen den beiden Frequenzbändern ein Schutzabstand zur Interferenzunterdrückung vorgesehen ist. Zugeordnete Frequenzen des Schutzabstands werden weder vom ersten noch vom zweiten Funkübertragungsverfahren verwendet. Seitens des ersten Netzwerks wird für den Bereich eine Verkehrslastermittlung veranlasst, bei der für Teilnehmer-Funkübertragungen benötigte Frequenzen des ersten und des zweiten Frequenzbands bestimmt werden.

Seitens des ersten Netzwerks wird ebenfalls für den Bereich eine Bestimmung von Interferenzen veranlasst, die das zweite Frequenzband auf das erste Frequenzband ausübt. In Abhängigkeit der Verkehrslast und der ermittelten Interferenzen wird eine adaptive Zuordnung von Frequenzen zum Schutzabstand durchgeführt.

## Beschreibung

Verfahren zur Intersystem-Interfernzunterdrückung zwichen zumindest zwei Funkübertragungsverfahren

Die Erfindung betrifft ein Verfahren zur Intersystem-Interferenzunterdrückung zwischen zumindest zwei Funkübertragungsverfahren gemäß dem Oberbegriff des Patentanspruchs 1.

Es sind Funkkommunikationsendgeräte bekannt, die zur Datenübertragung wahlweise ein erstes Funkübertragungsverfahren oder ein zweites Funkübertragungsverfahren verwenden können.

Diese Wahlmöglichkeit besteht jedoch nur innerhalb eines betrachteten räumlichen Bereichs, in dem zur Funkversorgung sowohl das erste als auch das zweite Funkübertragungsverfahren sowie die jeweilig zugeordneten Übertragungsnetze zur Verfügung stehen.

Beispielhaft, jedoch nicht ausschließlich, sei hier ein Endgerät genannt, das für eine Funkübertragung sowohl eine erste Übertragungstechnik verwendet, die gemäß dem Standard "Worldwide Interoperability for Microwave Access, WiMax" ausgebildet ist, als auch eine zweite Übertragungstechnik verwendet, die gemäß dem Standard "Universal Mobile Telecommunications System, UMTS" ausgebildet ist.

Der Standard "WiMAX" ist ein neuer Standard (IEEE 802.16) für regionale Funknetze, mit Reichweiten bis zu 50 km Reichweite und mit einer Datentransferrate von bis zu 109 Mbit/s bei 28 MHz Bandbreite im Frequenzbereich 10-66 GHz. Damit übertrifft er derzeitige WLAN-Techniken, die im Außenbereich-Einsatz eine Reichweite von bis zu 20 km aufweisen, bei Datenraten bis zu 108 Mbit/s.

Der Standard "UMTS" ist ein Mobilfunkstandard, der von der ITU für die so genannte "dritte Generation" von Mobilfunksystemen ausgewählt wurde. Dieser umfasst erweiterte multimediale Dienste sowie satelliten- und erdgestützte Sendeanlagen.

Für ein entsprechend ausgebildetes WiMAX/UMTS-Dualmode-Endgerät existieren somit das WiMax-Netzwerk als auch das UMTS-Netzwerk gleichberechtigt nebeneinander. Da beide Netzwerke jedoch Frequenzen bzw. Subträger von zueinander benachbarten Frequenzbereichen zur Funkübertragung verwenden, werden so genannte "Intersystem-Interferenzen" eines ersten Netzwerks bzw. einer ersten Funkübertragungstechnik bei einem zweiten Netzwerk bzw. bei einer zweiten Funkübertragungstechnik verursacht.

Die beschriebenen Intersystem-Interferenzen werden neben der Frequenz auch durch eine jeweils zur Funkübertragung verwendete Sendeleistung bestimmt. Eine UMTS-Basisstation, die Signale mit vergleichsweise hoher Sendeleistung in Downlink-Richtung zu einem Teilnehmer sendet, wird eine Uplink Verbindung von einem Teilnehmer zu einer WiMax-Basisstation, die mit vergleichsweise geringer Sendeleistung erfolgt, bei entsprechender Frequenzwahl stark stören.

Zur Reduzierung derartiger Interferenzen werden zwischen zwei benachbarten Frequenzbereichen als "Guard" bezeichnete Schutzabstände festgelegt, deren Frequenzen bzw. Subträger für eine Funkübertragung somit nicht verwendet werden können.

Nachteilig können jedoch hier Funkübertragungsressourcen einer Frequenzbandbreite des Schutzabstands nicht für kostenpflichtige Nutzdatenübertragungen von Teilnehmern genutzt werden.

Es ist daher Aufgabe der vorliegenden Erfindung, ein verbessertes Verfahren zur Intersystem-Interferenzunterdrückung zwischen zwei Funkübertragungsverfahren bei optimierter Anzahl von Funkübertragungsressourcen anzugeben.

Diese Aufgabe wird durch die Merkmale des Patentanspruchs 1 gelöst. Vorteilhafte Weiterbildungen der Erfindung sind in den Unteransprüchen angegeben.

Beim erfindungsgemäßen Verfahren wird zur Funkversorgung eines betrachteten räumlichen Bereiches sowohl ein erstes Funkübertragungsverfahren eines ersten Netzwerks als auch ein zweites Funkübertragungsverfahren eines zweiten Netzwerks zur Verfügung gestellt. Dabei verwendet das erste Funkübertragungsverfahren ein erstes Frequenzband und das zweite Funkübertragungsverfahren ein zweites Frequenzband zur Funkübertragung, wobei zwischen dem ersten und dem zweiten Frequenzband ein Schutzabstand vorgesehen ist.

Um Interferenzen zwischen den Frequenzbändern unterdrücken bzw. minimieren zu können, werden zugeordnete Frequenzen des Schutzabstandes weder vom ersten noch vom zweiten Funkübertragungsverfahren verwendet. Mit Hilfe des Schutzabstandes bzw. durch eine gewählte Frequenzbandbreite des Schutzabstandes wird ein Übersprechen zwischen den Frequenzbändern vermieden.

Erfindungsgemäß wird seitens des ersten Netzwerks für den räumlichen Bereich eine Verkehrlastermittlung veranlasst, bei der Frequenzen bzw. Subträger, die für eine Teilnehmerfunkübertragung benötigt werden, sowohl des ersten als auch des zweiten Frequenzbandes bestimmt werden. Seitens des ersten Netzwerks wird dann für den räumlichen Bereich eine Interferenzbestimmung veranlasst, bei der Werte von Störungen ermittelt werden, die das zweite Frequenzband auf das erste Frequenzband ausübt.

In Abhängigkeit der ermittelten Verkehrslast und der bestimmten Interferenzen erfolgt eine adaptive Zuordnung von Frequenzen zum Schutzabstand. Mit anderen Worten wird die dem Schutzabstand zugeordnete Frequenzbandbreite adaptiv variiert bzw. angepasst - nämlich in Abhängigkeit der aktuellen Verkehrslast und in Abhängigkeit einer momentanen, reellen Interferenzsituation.

In einer vorteilhaften Weiterbildung wird seitens des ersten Netzwerks im räumlichen Bereich eine Anzahl an so genannten "Multimode"-Endgeräten bestimmt. Diese "Multimode"-Endgeräte verfügen über Möglichkeiten zur Funkübertragung sowohl mit Hilfe des ersten Funkübertragungsverfahrens als auch mit Hilfe des zweiten Funkübertragungsverfahrens.

Die Interferenzbestimmung kann nun seitens der Multimode-Endgeräte erfolgen, da diese Interferenzwerte bzw. Störungen des zweiten Frequenzbandes auf das erste Frequenzband mit geringem Aufwand ermitteln können. Die ermittelten Interferenzen bzw. deren kennzeichnende Werte werden dann an das erste Netzwerk übertragen.

Für den Fall eines Schutzabstandes mit minimaler Frequenzbandbreite ist es in einer vorteilhaften Weiterbildung möglich, einen Teil der zur Verfügung stehenden Multimode-Endgeräte zu veranlassen, Funkübertragungen mit Hilfe des zweiten Netzwerks abzuwickeln. Freiwerdende Frequenzen bzw. Subträger werden dann dem Schutzabstand zugeordnet und dessen Frequenzbandbreite wird somit verbreitert. Mit anderen Worten wird eine Art "Intersystem-Handover" veranlasst.

In einer vorteilhaften Weiterbildung erfolgt die Übermittlung bzw. Rückmeldung der Interferenzwerte und/oder eine Übertragung von Steuerungssignalen zwischen einem Multimode-Endgerät und dem ersten Netzwerk mit Hilfe eines so genannten "Inband"-Signalisierungsverfahren, bei dem auf einen eigens einzurichtenden Signalisierungskanal verzichtet wird.

Alternativ zur Verwendung von Multimode-Endgeräten zur Interferenzbestimmung ist es möglich, eine Basisstation zur Interferenzbestimmung zu verwenden. Beispielsweise wird dazu eine Basisstation verwendet, die sowohl zur Durchführung des ersten Funkübertragungsverfahrens als auch zur Durchführung des zweiten Funkübertragungsverfahren ausgebildet ist.

Alternativ zur Verwendung einer zentralen Steuerungseinheit ist es auch möglich, die seitens einer ersten Basisstation ermittelten Interferenzwerte, Informationen über die von der ersten Basisstation unterstützten Funkübertragungsverfahren und Informationen bezüglich der Verkehrslast der ersten Basisstation direkt an eine zweite Basisstation zu übermitteln. Dies erfolgt beispielsweise durch:
- eine direkte Funkübertragung zwischen den beiden Basisstationen,
- eine als "Free Space Optic, FSO" bezeichnete Übertragung zwischen den beiden Basisstationen,
- durch eine optische Übertragung zwischen den beiden Basisstationen, oder
- durch eine "Inband"-Signalisierung zwischen den beiden Basisstationen.

Wird das erfindungsgemäße Verfahren mit Bestimmung der Verkehrslast und der Interferenzsituation usw. auch seitens des zweiten Netzwerks durchgeführt, wird in einer vorteilhaften Weiterbildung zur Steuerung der Schutzabstandbreite eine zentrale Steuerungseinheit verwendet, auf die sowohl das erste Netzwerk als auch das zweite Netzwerk zugreifen können.

Das erfindungsgemäße Verfahren ist insbesondere für eine Kombination des UMTS-Funkübertragungsverfahrens mit dem WLAN-Funkübertragungsverfahren einsetzbar.

Um unzulässige Beeinflussungen der Schutzabstandbreite durch Teilnehmer und/oder durch Netzbetreiber zu vermeiden, müssen sich in einer vorteilhaften Weiterbildung die Multimode-Endgeräte beim Netzwerk anmelden bzw. dort authentifizieren.

Durch das erfindungsgemäße Verfahren wird eine adaptive Anpassung der Schutzabstandbreite ermöglicht. Dadurch werden zusätzliche Funkübertragungsressourcen, Frequenzen bzw. Subträger zur Verfügung gestellt, die bei einer quasi statischen Schutzabstandsplanung mit festgesetzten Frequenzbandbreiten nicht zur Verfügung stehen würden.

Die Erfindung wird nachfolgend anhand einer Figur näher erläutert. Dabei zeigt:
- FIG 1: das erfindungsgemäße Verfahren für einen räumlichen Bereich mit OFDM- und mit CDMA-Funkübertragung, und
- FIG 2: eine Datenblock-Struktur zur Verwendung beim erfindungsgemäßen Verfahren.

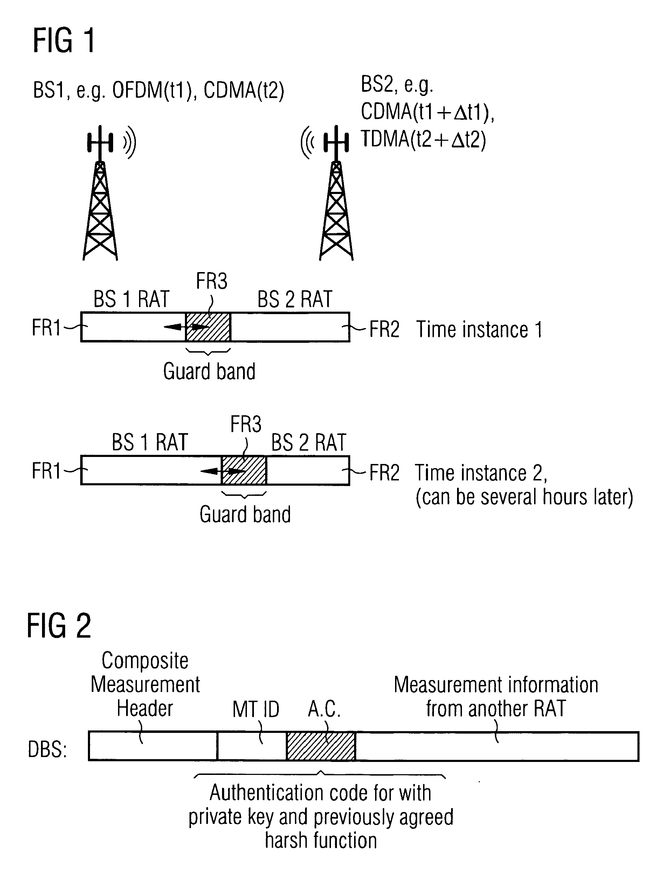

FIG 1 zeigt das erfindungsgemäße Verfahren für einen räumlichen Bereich mit OFDM- und mit CDMA-Funkübertragung.
Eine erste Basisstation BS1 ist sowohl für eine OFDM-Funkübertragung als auch für eine CDMA-Funkübertragung ausgebildet. Eine zweite Basisstation BS2 ist sowohl für eine TDMA-Funkübertragung als auch für eine CDMA-Funkübertragung ausgebildet.

Dabei ist es möglich, dass die zweite Basisstation B2 die TDMA-Funkübertragung und die CDMA-Funkübertragung zeitlich abwechselnd verwendet.

Die erste Basisstation BS1 verwendet Trägerfrequenzen eines ersten Frequenzbands FR1, während die zweite Basisstation BS2 Trägerfrequenzen eines zweiten Frequenzbands FR2 verwendet. Zwischen den beiden Frequenzbändern FR1 und FR2 ist ein Schutzabstand "Guard band" mit einer Frequenzbandbreite FR3 vorgesehen.

Seitens der ersten Basisstation BS1 wird eine Verkehrslast sowie eine Interferenzsituation für den betrachteten Bereich ermittelt. In Abhängigkeit davon wird der Schutzabstand "Guard band" bzw. dessen Frequenzbandbreite FR3 adaptiv angepasst.

Gezeigt ist zu einem Zeitpunkt "Time instance 1" eine Verbreiterung des Schutzabstandes "Guard band" auf Kosten der Breite des ersten Frequenzbandes FR1.

Im Laufe der Zeit ergab sich beispielsweise eine Verschiebung des Schutzabstands "Guard band" auf Kosten der Breite des zweiten Frequenzbands FR2. Zu einem weiteren Zeitpunkt "Time instance 2" kann dann erneut eine Verbreiterung des Schutzabstandes "Guard band" auf Kosten der Breite des ersten Frequenzbandes FR1 erfolgen.

FIG 2 zeigt eine Datenblockstruktur DBS zur Verwendung beim erfindungsgemäßen Verfahren.

Die Datenblockstruktur DBS wird zur Rückmeldung von Interferenzwerten, die seitens eines Multimode Endgeräts MT gemessen wurden, an ein betrachtetes Netzwerk verwendet.

Die Datenblockstruktur DBS weist einen als "Composite Measurement Header" bezeichneten ersten Teil auf, mit dessen Hilfe nachfolgend übermittelte Informationen - hier Messwerte - gekennzeichnet werden.

Die Datenblockstruktur DBS weist weiterhin einen als "MT ID" bezeichneten zweiten Teil auf, mit dessen Hilfe das rückmeldende Multimode-Endgerät MT gekennzeichnet wird.

Die Datenblockstruktur DBS weist dann einen als "A.C." bezeichneten dritten Teil auf, der zur Übertragung von Authentifizierungsinformationen verwendet wird.

Abschließend weist die Datenblockstruktur DBS einen als "Measurement information from another RAT" bezeichneten vierten Teil auf, der zur Übertragung von gemessenen Interferenzwerten verwendet wird. Dabei werden beispielsweise gemessene Signal-Interferenz-Abstände bzw. Signal-Interferenz-Verhältnisse (SIR-Werte) als Interferenzinformationen übertragen.

## Patentansprüche

1. Verfahren zur Intersystem-Interferenzunterdrückung zwischen zumindest zwei Funkübertragungsverfahren,
- bei dem zur Funkversorgung eines betrachteten räumlichen Bereichs sowohl ein erstes Funkübertragungsverfahren eines ersten Netzwerks als auch ein zweites Funkübertragungsverfahren eines ersten Netzwerks zur Verfügung steht,
- bei dem das erste Funkübertragungsverfahren ein erstes Frequenzband und das zweite Funkübertragungsverfahren ein zweites Frequenzband zur Funkübertragung verwendet, wobei zwischen den beiden Frequenzbändern ein Schutzabstand zur Interferenzunterdrückung vorgesehen ist, dessen zugeordnete Frequenzen weder vom ersten noch vom zweiten Funkübertragungsverfahren verwendet werden,
**dadurch gekennzeichnet,**
- **dass** seitens des ersten Netzwerks für den Bereich eine Verkehrslastermittlung veranlasst wird, bei der für Teilnehmer-Funkübertragungen benötigte Frequenzen des ersten und des zweiten Frequenzbands bestimmt werden,
- **dass** seitens des ersten Netzwerks für den Bereich eine Bestimmung von Interferenzen veranlasst wird, die das zweite Frequenzband auf das erste Frequenzband ausübt, und
- **dass** in Abhängigkeit der Verkehrslast und der ermittelten Interferenzen eine adaptive Zuordnung von Frequenzen zum Schutzabstand durchgeführt wird.

2. Verfahren nach Anspruch 1,
**dadurch gekennzeichnet,**
- **dass** seitens des ersten Netzwerks eine im Bereich zur Verfügung stehende Anzahl an Multimode-Endgeräten bestimmt wird, die über eine Möglichkeit zur Funkübertragung sowohl mit dem ersten als auch mit dem zweite Funkübertragungsverfahren verfügen, und
- **dass** seitens der Multimode-Endgeräte die Interferenzbestimmung durchgeführt wird und die ermittelten Interferenzen an das erste Netzwerk gemeldet werden.

3. Verfahren nach Anspruch 2,
**dadurch gekennzeichnet,**
**dass** beim Unterschreiten einer vorgegebenen minimalen Frequenzbandbreite des Schutzabstands zumindest ein Teil der Multimode-Endgeräte, die zur Funkübertragung das erste Funkübertragungsverfahren verwenden, auf das zweite Funkübertragungsverfahren umgeschaltet werden, um ein Überschreiten der minimalen Frequenzbandbreite zu erreichen.

4. Verfahren nach Anspruch 2 oder 3,
**dadurch gekennzeichnet,**
**dass** seitens des ersten Netzwerks ein Signalisierungskanal zur Interferenzübermittlung zu jedem Multimode-Endgerät eingerichtet wird.

5. Verfahren nach Anspruch 4,
**dadurch gekennzeichnet,**
**dass** die Signalisierung mit einem Inband-Signalisierungsverfahren durchgeführt wird.

6. Verfahren nach Anspruch 1,
**dadurch gekennzeichnet,**
**dass** seitens des ersten Netzwerks eine Basisstation zur Interferenzmessung verwendet wird, die über eine Möglichkeit zur Funkübertragung sowohl mit dem ersten als auch mit dem zweite Funkübertragungsverfahren verfügt.

7. Verfahren nach einem der vorhergehenden Ansprüche,
**dadurch gekennzeichnet,**
**dass** die adaptive Zuordnung von Frequenzen zum Schutzabstand durch eine zentrale Steuerungsstelle erfolgt, die sowohl dem ersten als auch dem zweite Netzwerk zugeordnet ist.

8. Verfahren nach einem der vorhergehenden Ansprüche,
**dadurch gekennzeichnet,**
- **dass** seitens des zweiten Netzwerks für den Bereich eine Verkehrslastermittlung veranlasst wird, bei der für Teilnehmer-Funkübertragungen benötigte Frequenzen des ersten und des zweiten Frequenzbands bestimmt werden,
- **dass** seitens des zweiten Netzwerks für den Bereich eine Bestimmung von Interferenzen veranlasst wird, die das erste Frequenzband auf das zweite Frequenzband ausübt, und
- **dass** in Abhängigkeit der Verkehrslast und der ermittelten Interferenzen eine adaptive Zuordnung von Frequenzen zum Schutzabstand erfolgt.

9. Verfahren nach einem der vorhergehenden Ansprüche,
**dadurch gekennzeichnet,**
- **dass** ein UMTS-Funkübertragungsverfahren als erstes Funkübertragungsverfahren verwendet wird, und
- **dass** ein WLAN-Funkübertragungsverfahren als zweites Funkübertragungsverfahren verwendet wird.

10. Verfahren nach einem der Ansprüche 1 bis 8,
**dadurch gekennzeichnet,**
- **dass** ein WLAN-Funkübertragungsverfahren als erstes Funkübertragungsverfahren verwendet wird, und
- **dass** ein UMTS-Funkübertragungsverfahren als zweites Funkübertragungsverfahren verwendet wird.

11. Verfahren nach Anspruch 2,
**dadurch gekennzeichnet,**
**dass** sich die Multimode-Endgeräte zur Rückmeldung von Interferenzen gegenüber dem Netzwerk authentifizieren.

12. Verfahren nach einem der vorhergehenden Ansprüche,
**dadurch gekennzeichnet,**
**dass** zur Bestimmung der Interferenzen Signal-Interferenz-Abstände oder Signal-Interferenz-Verhältnisse verwendet werden.
